# FASCICULE DE BREVET EUROPEEN

(11) **EP 1 189 769 B1**
(45) Date de publication et mention de la délivrance du brevet: **20.08.2008**
(21) Numéro de dépôt: 99919332.9
(22) Date de dépôt: 14.05.1999
(51) Int. Cl.: B60C 9/20, B60C 9/22

(54) **ARMATURE DE SOMMET POUR PNEUMATIQUE RADIAL**
VERSTÄRKUNGSGÜRTEL FÜR EINEN RADIALREIFEN
RADIAL TYRE CROWN REINFORCEMENT

(43) Date de publication de la demande: 27.03.2002
(73) Titulaire: Société de Technologie Michelin, 63000 Clermont-Ferrand Cedex 09 (FR); Michelin Recherche et Technique S.A., 1763 Granges-Paccot (CH)
(72) Inventeur: CLUZEL, Guy, F-63110 Beaumont (FR)
(74) Mandataire: Le Cam, Stéphane Georges Elie
(86) Numéro de dépôt international: PCT/FR1999/001160
(87) Numéro de publication internationale: WO 2000/069659

(56) Documents cités:
- EP-A- 0 288 987
- FR-A- 2 267 893
- FR-A- 2 379 391
- FR-A- 2 770 458
- FR-A- 2 778 370
- GB-A- 2 064 445

## Description

La présente invention concerne un pneumatique à armature de carcasse radiale ancrée de part et d'autre à au moins une tringle de bourrelet et ayant une armature de sommet constituée d'au moins deux nappes dites de travail, superposées et formées de fils ou câbles parallèles dans chaque nappe et croisés d'une nappe à la suivante en faisant avec la direction circonférentielle du pneumatique des angles au plus égaux à 45° en valeur absolue.

Elle concerne plus particulièrement un pneumatique du type "Poids-Lourds", dont le rapport de la hauteur sur jante H sur sa largeur axiale maximale S est au plus égal à 0,80, et destiné à équiper un véhicule de moyen ou fort tonnage, tel que camion, autobus, remorque, etc.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Le manque d'endurance concerne aussi bien la résistance à la fatigue des nappes de sommet, et en particulier la résistance à la séparation entre extrémités de nappes, que la résistance à la fatigue des câbles de la portion d'armature de carcasse située sous l'armature de sommet, la première insuffisance étant fortement influencée par la température de fonctionnement régnant en bordures des nappes de travail, que ce soit en roulage ligne droite ou en roulage en dérive.

Une première solution a été décrite dans la demande française FR 2 728 510 et propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle, la largeur axiale de ladite nappe étant au moins égale à 0,7 S_{0.}

Les problèmes concernant la séparation entre nappes de travail et la résistance à la fatigue des câbles d'armature de carcasse ont été résolus, les températures de fonctionnement ont été abaissées ; par contre les roulages prolongés des pneumatiques ainsi construits ont fait apparaître des ruptures de fatigue des câbles de la nappe additionnelle et plus particulièrement des bords de ladite nappe, que la nappe dite de triangulation soit présente ou non.

Il est toujours possible de changer les éléments de renforcement concernés, et en particulier de choisir des câbles de construction différente ou des câbles de plus forte résistance à la rupture. La solution ci-dessus, certes facile, est toujours onéreuse.

Aussi et afin de remédier à ces nouveaux inconvénients ci-dessus et d'améliorer l'endurance de l'armature de sommet du type de pneumatique étudié, la demande française FR 2 770 458, non publiée à la date de dépôt de la présente demande, et correspondant au préambule des revendications 1 à 3, a choisi une autre solution et propose, de part et d'autre du plan équatorial . et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

L'endurance à la fatigue des éléments circonférentiels n'est pas optimale, à moins que la densité minimale des éléments en bords de nappe et une résistance à la rupture minimale des dits éléments soient respectées, ce qui occasionne un prix de revient matière élevé.

En vue d'améliorer l'endurance de l'armature de sommet du type de pneumatique étudié, sans se trouver confronté à des problèmes de fatigue d'éléments de renforcement, la demande française FR 2 778 368 non publiée à la date de dépôt modifie radicalement l'orientation des éléments de renforcement inextensibles de la nappe additionnelle disposée radialement entre lesdites nappes de travail, les dits éléments étant alors radiaux.

Les contraintes de cisaillement entre les deux nappes de sommet de travail sont très importantes et plus particulièrement dans le cas du couplage des dites deux nappes de travail, ce qui entraîne, avec la fatigue du pneumatique, des délaminations entre les nappes. Afin de remédier aux inconvénients ci-dessus et d'améliorer l'endurance de l'armature de sommet du type de pneumatique étudié, l'invention propose de concilier ingénieusement les avantages de l'orientation radiale avec ceux de l'orientation circonférentielle des éléments de renforcement de la nappe additionnelle située radialement entre les deux nappes de sommet de travail.

Selon une première variante, le pneumatique P, conforme à l'invention, à armature de carcasse radiale de largeur axiale maximale S₀, comprenant une armature de sommet formée d'au moins deux nappes de sommet de travail d'éléments de renforcement inextensibles, croisés d'une nappe à l'autre en faisant avec la direction circonférentielle des angles compris entre 10° et 45°, lesdites nappes ayant des largeurs axiales L₃₂, L₃₄ au moins égales à 80 % de la largeur S₀, une armature additionnelle formée au moins d'une nappe comprenant au moins des éléments de renforcement sensiblement circonférentiels, de largeur L₃₃ inférieure d'au moins 15% de la largeur S₀ à la largeur L₃₂ (L₃₄) de la nappe de travail la moins large, étant disposée radialement entre lesdites nappes de travail, est caractérisé en ce que la nappe additionnelle est axialement composée de trois parties, une partie centrale sous forme de nappe formée d'éléments de renforcement métalliques inextensibles et sensiblement radiaux, ladite nappe ayant une largeur axiale L'₃₃ égale à au moins 45% de la largeur S₀, et deux parties latérales sous formes de bandes formées chacune d'éléments de renforcement métalliques circonférentiels élastiques, le module d'élasticité à la traction par unité de largeur d'une bande latérale étant au plus égal au module d'élasticité à la traction, mesuré dans les mêmes conditions, de la nappe de travail la plus extensible, et la largeur L''₃₃ de chaque bande étant au plus égale à 10% de la largeur S₀.

Il faut entendre par élément inextensible un élément, câble ou monofilament, qui a un allongement relatif inférieur à 0,2 % lorsqu'il est soumis à une force de traction égale à 10% de la charge de rupture. Dans le cas du pneumatique considéré, les éléments de renforcement inextensibles sont préférentiellement des câbles métalliques en acier inextensibles.

Des éléments métalliques orientés sensiblement parallèlement à la direction circonférentielle ou dits circonférentiels sont des éléments qui font avec ladite direction des angles compris dans l'intervalle + 2,5°, - 2,5° autour de 0°.

Des éléments de renforcement, fils ou câbles, sensiblement radiaux sont des éléments qui font avec la direction méridienne des angles compris dans l'intervalle + 5°, - 5° autour de 0°.

Des éléments de renforcement métalliques sont dits élastiques quand ils présentent un allongement relatif supérieur à 2% lorsqu'ils sont soumis à une force de traction égale à 10% de leur charge de rupture. Ils présentant une courbe contrainte de traction en fonction de l'allongement relatif ayant des pentes faibles pour les faibles allongements et une pente sensiblement constante et forte pour les allongements supérieurs, le changement de pente pouvant se produire dans un intervalle d'allongement relatif compris entre 0,2% et 0,8%. De ce fait, les dits éléments peuvent être dénommés éléments "bi-module".

Un module d'élasticité E à la traction d'une nappe par unité de largeur résulte de la contrainte de traction σ exercée selon la direction des éléments de renforcement et sur une unité de largeur pour obtenir un allongement relatif ε. Par module d'élasticité de la partie latérale de la nappe additionnelle au plus égal au module du même nom de la nappe de travail la plus extensible, il faut entendre que le module de ladite partie de nappe additionnelle, quelque soit l'allongement relatif, est au plus égal au module de la nappe de travail la plus extensible quelque soit l'allongement relatif, la nappe la plus extensible étant la nappe qui, pour chaque valeur de contrainte de traction présente un allongement relatif supérieur à celui de l'autre nappe pour la même contrainte.

De manière avantageuse, le module de la partie latérale de la nappe additionnelle sera tel qu'il soit faible pour un allongement relatif faible compris entre 0% et 0,5%, et au plus égal au module d'élasticité à la traction le plus élevé de la nappe de travail la plus extensible, pour les allongements relatifs supérieurs à 0,5%, les dits modules d'élasticité étant approximativement égaux, pour un allongement relatif donné ε, aux produits du module tangent d'élasticité des éléments de renforcement pour ledit allongement ε par la fraction volumique de métal dans la nappe.

Les parties latérales des nappes additionnelles peuvent aussi être, dans une deuxième variante, formées d'éléments métalliques inextensibles circonférentiellement et coupés de manière à former des tronçons de longueur très inférieure à la circonférence de la nappe la moins longue, mais préférentiellement supérieure à 0,1 fois ladite circonférence, les coupures entre tronçons étant axialement décalées les unes par rapport aux autres. Un tel mode de réalisation permet de conférer, de manière simple, aux parties latérales de la nappe additionnelle un module pouvant facilement être ajusté (par le choix des intervalles entre tronçons d'une même rangée), mais dans tous les cas plus faible que le module de la nappe constituée des mêmes éléments métalliques mais continus, le module de la nappe additionnelle étant mesuré sur une nappe vulcanisée d'éléments coupés, prélevée sur le pneumatique.

Dans une troisième variante pour obtenir une bande latérale ayant un module de traction inférieur au module de traction de la nappe de travail la plus extensible, il est avantageux d'utiliser comme éléments de renforcement de ladite partie latérale des éléments métalliques ondulés et d'orientation circonférentielle, le rapport a/λ de l'amplitude d'ondulation sur la longueur d'onde étant au plus égale à 0,09.

Dans les deux dernières variantes citées, les éléments métalliques sont préférentiellement des câbles d'acier.

De manière préférentielle, les nappes de travail sont de part et d'autre du plan équatorial et, dans le prolongement axial immédiat de l'armature additionnelle, couplées sur une distance axiale 1 au moins égale à 3,5% de la largeur S₀, pour être ensuite découplées par des profilés de mélange de caoutchouc au moins sur le restant de la largeur commune aux dites deux nappes de travail, la présence des dits couplages permettant encore la diminution des contraintes de tension agissant sur les câbles circonférentiels du bord situé le plus près du couplage.

L'épaisseur des profilés de découplage entre nappes de travail, mesurée au droit des extrémités de la nappe de travail la moins large, sera au moins égale à deux millimètres, et préférentiellement supérieure à 2,5 mm.

Il faut entendre par nappes couplées des nappes dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

Les nappes de travail ont généralement des largeurs axiales inégales. Que la nappe de travail radialement la plus à l'extérieur soit moins large axialement que la nappe de travail disposée radialement la plus à l'intérieur, ou que ladite nappe radialement la plus à l'extérieur soit plus large axialement que la nappe de travail disposée radialement la plus à l'intérieur, il est alors avantageux que l'armature de sommet soit complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

Un élément de renforcement élastique pour nappe de protection répond à la même définition que précédemment et présente un allongement relatif supérieur à 2% lorsqu'il est soumis à une force de traction égale à 10% de la charge de rupture. Les dits éléments sont aussi des câbles métalliques en acier.

La nappe de protection peut avoir une largeur axiale inférieure à la largeur axiale de la nappe de travail la moins large, mais avantageusement suffisante pour recouvrir totalement la zone de couplage entre les deux nappes de sommet de travail, et d'autant plus avantageusement que la bande de roulement du pneumatique considéré comprend une rainure circonférentielle ou quasi-circonférentielle axialement disposée radialement sur la zone de couplage entre les deux nappes de travail. Ladite nappe de protection peut aussi avoir une largeur axiale supérieure à la largeur axiale de la nappe de travail la moins large, telle qu'elle recouvre les bords de la nappe de travail la moins large et, dans le cas de la nappe radialement supérieure comme étant le moins large, telle qu'elle soit couplée, dans le prolongement axial de l'armature additionnelle, avec la nappe de sommet de travail la plus large sur une distance axiale au moins égale à 2% de la largeur S₀ pour être ensuite, axialement à l'extérieur, découplée de ladite nappe de travail la plus large par des profilés d'épaisseur au moins égale à 2 mm. La nappe de protection formée d'éléments de renforcement élastiques peut, dans le cas cité ci-dessus, être d'une part éventuellement découplée des bords de ladite nappe de travail la moins large par des profilés d'épaisseur sensiblement moindre que l'épaisseur des profilés séparant les bords des deux nappes de travail, et avoir d'autre part une largeur axiale inférieure ou supérieure à la largeur axiale de la nappe de sommet la plus large.

Quelle que soit la solution adoptée, l'armature de sommet peut être complétée, radialement à l'intérieur entre l'armature de carcasse et la nappe de travail radialement intérieure la plus proche de ladite armature de carcasse, par une nappe de triangulation d'éléments de renforcement inextensibles métalliques en acier faisant, avec la direction circonférentielle, un angle supérieur à 60° et de même sens que celui de l'angle formé par les éléments de renforcement de la nappe radialement la plus proche de l'armature de carcasse. Ladite nappe de triangulation peut avoir une largeur axiale inférieure à ladite nappe de travail la moins large, mais aussi la largeur nécessaire et suffisante pour ladite nappe puisse être couplée avec une autre nappe, que ce soit avec la nappe de travail la plus large soit avec la nappe de protection radialement au dessus des nappes de travail. soit avec la nappe de travail la plus large.

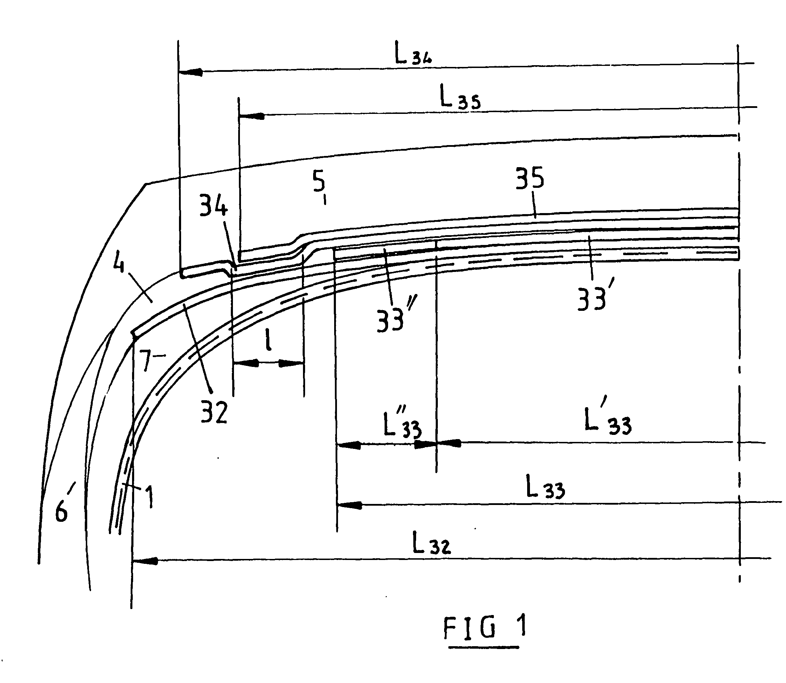

Les caractéristiques et avantages de l'invention seront mieux compris à l'aide de la description qui suit et qui se réfère au dessin, illustrant à titre non limitatif un exemple d'exécution, et sur lequel la figure 1 unique représente schématiquement, vu en section méridienne, une variante préférentielle d'armature de sommet conforme à l'invention.

Sur la figure 1, le pneumatique P, de dimension 495/45 R 22.5 X, a un rapport de forme H/S égal à 0,45, H étant la hauteur du pneumatique P sur sa jante de montage et S sa largeur axiale maximale. Ledit pneumatique P comprend une armature de carcasse radiale (1) ancrée dans chaque bourrelet à au moins une tringle en formant un retournement, et formée d'une seule nappe de câbles métalliques. Cette armature de carcasse (1) est frettée par une armature de sommet (3), formée radialement de l'intérieur à l'extérieur :
- d'une première nappe de travail (32) formée de câbles métalliques inextensibles 27.23 frettés, continus sur toute la largeur de la nappe, orientés d'un angle α, égal dans le cas montré à 18°, ladite nappe ayant un module d'élasticité par unité de largeur, compte tenu de l'espacement choisi entre câbles, égal à 5 300 daN/mm²,
- surmontant la première nappe de travail (32), d'une armature additionnelle (33), composée
   * d'une partie centrale (33') sous forme de nappe formée des mêmes câbles métalliques en acier inextensibles, lesdits câbles étant orientés à 90° par rapport à la direction circonférentielle, les bords axialement extérieurs de ladite nappe (33') étant séparés de la nappe de sommet de travail (32) par des couches de caoutchouc de faible épaisseur,
   * de deux parties latérales (33") sous forme de nappes formées de câbles métalliques en acier continus élastiques bi-module, un tel câble présentant un faible module tangent d'élasticité à la traction, de l'ordre de 5 000 daN/mm² pour des faibles allongements relatifs, par exemple jusqu'à 0,4%, et un module tangent d'élasticité pour les allongements relatifs supérieurs à 0,6%, par exemple supérieur à 10 000 daN/mm², ce qui confère à ladite partie latérale un module tangent d'élasticité par unité de largeur sensiblement égal à 4 000 daN/mm² pour les dits allongements supérieurs,
- puis d'une deuxième nappe de travail (34) formée de câbles métalliques inextensibles identiques à ceux de la première nappe de travail (32), et faisant avec la direction circonférentielle un angle β,opposé à l'angle α et, dans le cas montré, égal audit angle α de 18° (mais pouvant être différent dudit angle α),
- et enfin d'une dernière nappe (35) de câbles dits élastiques orientés par rapport à la direction circonférentielle d'un angle γ. de même sens que l'angle β et égal audit angle β (mais pouvant être différent dudit angle), cette dernière nappe étant une nappe de protection formée de câbles métalliques élastiques.

La largeur axiale L₃₂ de la première nappe de travail (32) est égale à 0,87 fois la largeur axiale maximale S₀ de la fibre moyenne de l'armature de carcasse (1), soit 416 mm, ce qui est, pour un pneumatique de forme usuelle, sensiblement inférieur à la largeur L₁ de la bande de roulement, qui est égale, dans le cas étudié, à 430 mm. La largeur axiale L₃₄ de la deuxième nappe de travail (34) est égale à 0,83 fois la largeur axiale S₀, soit 400 mm. Quant à la largeur axiale globale L₃₃ de la nappe additionnelle (33), elle est égale à 320 mm. Ladite largeur est décomposée comme suit : la nappe centrale (33') formée de câbles radiaux a une largeur L'₃₃ égale à 240 mm, ce qui représente 50% de la largeur S₀, chaque nappe latérale (33 ") formée de câbles ondulés circonférentiels a une largeur axiale L"₃₃ égale à 40 mm, la largeur d'une nappe à câbles ondulés étant mesurée de crête à crête de l'ondulation. La dernière nappe de sommet (35), dite de protection, a une largeur L₃₅ sensiblement égale à 370 mm.

Les deux nappes de travail (32) et (34) sont, de chaque côté du plan équatorial et axialement dans le prolongement de la nappe additionnelle (33), couplées sur une largeur axiale 1, égale dans ce cas à 15 mm : les câbles de la première nappe de travail (32) et les câbles de la deuxième nappe de travail (34), sur la largeur axiale 1 de couplage des deux nappes, sont séparés radialement entre eux par une couche de gomme, dont l'épaisseur est minimale et correspond au double de l'épaisseur de la couche caoutchouteuse de calandrage des câbles métalliques 27.23 frettés dont est formée chaque nappe de travail (32, 34), soit 0,8 mm. Sur la largeur restante commune aux deux nappes de travail, c'est-à-dire environ 20 mm de chaque côté, les deux nappes de travail (32) et (34) sont séparés par un profilé (4) de caoutchouc de forme sensiblement triangulaire, l'épaisseur dudit profilé (4) étant croissante en allant de l'extrémité axiale de la zone de couplage à l'extrémité de la nappe de travail la moins large, pour atteindre à ladite extrémité une épaisseur de 4 mm. Ledit profilé (4) a une largeur suffisante pour recouvrir radialement l'extrémité de la nappe de travail (32) la plus large, qui est, dans ce cas la nappe de travail radialement la plus proche de l'armature de carcasse. Le sommet du pneumatique est complété par une bande de roulement (5) réunie aux bourrelets par deux flancs (6) et la nappe de triangulation, radialement adjacente à l'armature de carcasse (1) de part et d'autre du plan équatorial, s'en éloigne en allant axialement vers l'extérieur, ladite nappe étant réunie à l'armature de carcasse (1) au moyen de profilés (7) de caoutchouc à forme triangulaire.

La deuxième solution testée correspond à l'emploi, pour éléments de renforcement circonférentiels des parties latérales (33") de la nappe additionnelle (33), de câbles métalliques en acier inextensibles tels que les câbles employés dans les nappes de sommet de travail, mais coupés de sorte à avoir des tronçons de câbles dont la longueur circonférentielle est égale à 1/6 de la longueur circonférentielle de la nappe. Ladite nappe additionnelle a, dans le cas étudié, un module tangent d'élasticité à la traction, par unité de largeur et pour un allongement relatif de 0,4%, estimé égal à 3 500 daN/mm².

La troisième solution correspond à l'emploi, pour éléments de renforcement circonférentiels des parties latérales (33") de la nappe additionnelle (33), des câbles métalliques en acier inextensibles tels que ceux employés dans les nappes de travail, mais ondulés, le rapport a/λ des ondulations, a étant l'amplitude d'ondulation et λ sa longueur d'onde, étant au plus égal à 0,09, ledit rapport permettant une élongation suffisante des dits câbles dans le cas de roulage à forte dérive tout en renforçant de manière satisfaisante les parties axiales de l'armature de sommet au voisinage des largeurs de couplage entre nappes de sommet de travail.

## Revendications

1. Pneumatique à armature de carcasse radiale (1) de largeur axiale maximale S₀, comprenant une armature de sommet (3) formée d'au moins deux nappes de sommet de travail (32, 34) d'éléments de renforcement inextensibles, croisés d'une nappe (32) à l'autre (34) en faisant avec la direction circonférentielle des angles compris entre 10° et 45°, lesdites nappes (32, 34) ayant des largeurs axiales L₃₂, L₃₄ au moins égales à 80 % de la largeur S_{0,} une armature additionnelle (33), formée au moins d'une nappe (33) comprenant au moins des éléments de renforcement sensiblement circonférentiels, de largeur L₃₃ inférieure d'au moins 15% de la largeur S₀ à la largeur L₃₂ (L₃₄) de la nappe de travail la moins large, étant disposée radialement entre lesdites nappes de travail (32, 34), **caractérisé en ce que** la nappe additionnelle (33) est axialement composée de trois parties, une partie centrale sous forme de nappe (33') formée d'éléments de renforcement inextensibles et sensiblement radiaux, ladite nappe (33') ayant une largeur axiale L'₃₃ égale à au moins 45% de la largeur S₀, et deux parties latérales sous formes de bandes (33") formées chacune d'éléments de renforcement métalliques circonférentiels élastiques, le module d'élasticité à la traction par unité de largeur d'une bande latérale (33") étant au plus égal au module d'élasticité à la traction, mesuré dans les mêmes conditions, de la nappe de travail (32, 34) la plus extensible, et la largeur L"₃₃ de chaque bande étant au plus égale à 10% de la largeur S₀.

2. Pneumatique à armature de carcasse radiale (1) de largeur axiale maximale S₀, comprenant une armature de sommet (3) formée d'au moins deux nappes de sommet de travail (32, 34) d'éléments de renforcement inextensibles, croisés d'une nappe (32) à l'autre (34) en faisant avec la direction circonférentielle des angles compris entre 10° et 45°, lesdites nappes (32, 34) ayant des largeurs axiales L₃₂, L₃₄ au moins égales à 80 % de la largeur S₀, une armature additionnelle (33), formée au moins d'une nappe (33) comprenant au moins des éléments de renforcement sensiblement circonférentiels, de largeur L₃₃ inférieure d'au moins 15% de la largeur S₀ à la largeur L₃₂ (L₃₄) de la nappe de travail la moins large, étant disposée radialement entre lesdites nappes de travail (32, 34), **caractérisé en ce que** la nappe additionnelle (33) est axialement composée de trois parties, une partie centrale sous forme de nappe (33') formée d'éléments de renforcement inextensibles et sensiblement radiaux, ladite nappe (33') ayant une largeur axiale L'₃₃ égale à au moins 45% de la largeur S₀, et deux parties latérales sous formes de bandes (33 ") formées chacune d'éléments de renforcement métalliques, circonférentiels, et coupés de manière à former des tronçons de longueur inférieure à la circonférence de la nappe la moins longue, mais supérieure à 0,1 fois ladite circonférence, les coupures entre tronçons étant axialement décalées les unes par rapport aux autres, le module d'élasticité à la traction par unité de largeur d'une bande latérale (33") étant inférieur au module d'élasticité à la traction, mesuré dans les mêmes conditions, de la nappe de travail (32, 34) la plus extensible, et la largeur L"₃₃ de chaque bande étant au plus égale à 10% de la largeur S₀.

3. Pneumatique à armature de carcasse radiale (1) de largeur axiale maximale S₀, comprenant une armature de sommet (3) formée d'au moins deux nappes de sommet de travail (32, 34) d'éléments de renforcement inextensibles, croisés d'une nappe (32) à l'autre (34) en faisant avec la direction circonférentielle des angles compris entre 10° et 45°, lesdites nappes (32, 34) ayant des largeurs axiales L₃₂, L₃₄ au moins égales à 80 % de la largeur S₀, une armature additionnelle (33), formée au moins d'une nappe (33) comprenant au moins des éléments de renforcement sensiblement circonférentiels, de largeur inférieure d'au moins 15% de la largeur S₀ à la largeur L₃₂ (L₃₄) de la nappe de travail la moins large, étant disposée radialement entre lesdites nappes de travail (32, 34), **caractérisé en ce que** la nappe additionnelle (33) est axialement composée de trois parties, une partie centrale sous forme de nappe (33') formée d'éléments de renforcement inextensibles et sensiblement radiaux, ladite nappe (33') ayant une largeur axiale L'₃₃ égale à au moins 45% de la largeur S₀, et deux parties latérales sous formes de bandes (33") formées chacune d'éléments de renforcement métalliques, circonférentiels, inextensibles, et ondulés, le rapport a/λ de l'amplitude d'ondulation a sur la longueur d'onde λ étant au plus égale à 0,09, le module d'élasticité à la traction par unité de largeur d'une bande latérale (33") étant inférieur au module d'élasticité à la traction, mesuré dans les mêmes conditions, de la nappe de travail (32, 34) la plus extensible, et la largeur L"₃₃ de chaque bande étant au plus égale à 10% de la largeur S₀.

4. Pneumatique selon la revendication 1, **caractérisé en ce que** les éléments de renforcement métalliques élastiques des parties latérales (33") de la nappe additionnelle (33) présentent une courbe contrainte de traction σ en fonction de l'allongement relatifs ayant des pentes faibles pour les faibles allongements et une pente sensiblement constante et forte pour les allongements supérieurs, le changement de pente pouvant se produire dans un intervalle d'allongement relatif compris entre 0,2% et 0,8%.

5. Pneumatique selon la revendication 1, **caractérisé en ce que** le module de traction de chaque partie latérale (33") de nappe additionnelle (33) est tel qu'il soit faible pour un allongement relatif compris entre 0% et 0,4%, et au plus égal au module d'élasticité à la traction le plus élevé de la nappe de travail (32, 34) la plus extensible, pour les allongements relatifs supérieurs à 0,4%.

6. Pneumatique selon l'une des revendications 1 à 5, **caractérisé en ce que** les éléments de renforcement inextensibles des nappes (32, 34, 33') sont préférentiellement des câbles métalliques en acier.

7. Pneumatique selon l'une des revendications 1 à 5, **caractérisé en ce que** les nappes de travail (32, 34) sont de part et d'autre du plan équatorial et, dans le prolongement axial immédiat de l'armature additionnelle (33), couplées sur une distance axiale 1 au moins égale à 3,5 % de la largeur S₀, pour être ensuite découplées par des profilés (4) de mélange de caoutchouc au moins sur le restant de la largeur commune aux dites deux nappes de travail (32, 34).

8. Pneumatique selon l'une des revendications 1 à 5, **caractérisé en ce que** l'armature de sommet (3) est complétée radialement à l'extérieur par au moins une nappe supplémentaire (35), dite de protection, d'éléments de renforcement dits élastiques, orientés par rapport à la direction circonférentielle avec un angle compris entre 10° et 45° et de même sens que l'angle formé par les éléments inextensibles de la nappe de travail (32, 34) qui lui est radialement adjacente.

9. Pneumatique selon la revendication 8, **caractérisé en ce que** les éléments de renforcement élastiques de la (des) nappe(s) (35) de protection sont des câbles métalliques en acier.

10. Pneumatique selon la revendication 8, **caractérisé en ce que** la nappe de protection (35) a une largeur axiale L₃₅ supérieure à la largeur axiale de la nappe de travail radialement supérieure la moins large (34), telle qu'elle recouvre les bords de ladite nappe de travail la moins large et telle qu'elle soit couplée, dans le prolongement axial de l'armature additionnelle (33), avec la nappe de sommet de travail la plus large (32) sur une distance axiale au moins égale à 2 % de la largeur S₀, pour être ensuite, axialement à l'extérieur, découplée de ladite nappe de travail la plus large (32) par des profilés d'épaisseur au moins égale à 2 mm.

11. Pneumatique selon l'une des revendications 1 à 5, **caractérisé en ce que** l'armature de sommet (3) est complétée, radialement à l'intérieur entre l'armature de carcasse (1) et la nappe de travail radialement intérieure (32) la plus proche de ladite armature de carcasse (1), par une nappe de triangulation d'éléments de renforcement inextensibles métalliques en acier faisant, avec la direction circonférentielle, un angle supérieur à 60° et de même sens que celui de l'angle formé par les éléments de renforcement de la nappe (32) radialement la plus proche de l'armature de carcasse (1).

## Claims

1. A tyre with radial carcass reinforcement (1) of maximum axial width S₀, comprising a crown reinforcement (3) formed of at least two working crown plies (32, 34) of inextensible reinforcement elements, crossed from one ply (32) to the other (34), forming angles of between 10° and 45° with the circumferential direction, said plies (32, 34) having axial widths L₃₂, L₃₄ at least equal to 80% of the width S₀, an additional reinforcement (33) formed of least one ply (33) comprising at least substantially circumferential reinforcement elements, of width L₃₃ less by at least 15% of the width S₀ than the width L₃₂ (L₃₄) of the least wide working ply, and arranged radially between said working plies (32, 34), **characterised in that** the additional reinforcement (33)is axially composed of three parts, a central part in the form of a ply (33') formed of inextensible, substantially radial reinforcement elements, said ply (33') having an axial width L'₃₃ equal to at least 45% of the width S₀, and two lateral parts in the form of strips (33"), each formed of circumferential elastic metallic reinforcement elements, the modulus of elasticity upon traction per unit of width of a lateral strip (33") being at most equal to the modulus of elasticity upon traction, measured under the same conditions, of the most extensible working ply (32, 34), and the width L"₃₃ of each strip being at most 10% of the width S₀.

2. A tyre with radial carcass reinforcement (1) of maximum axial width S₀, comprising a crown reinforcement (3) formed of at least two working crown plies (32, 34) of inextensible reinforcement elements, crossed from one ply (32) to the other (34), forming angles of between 10° and 45° with the circumferential direction, said plies (32, 34) having axial widths L₃₂, L₃₄ at least equal to 80% of the width S₀, an additional reinforcement (33) formed of least one ply (33) comprising at least substantially circumferential reinforcement elements, of width L₃₃ less by at least 15% of the width S₀ than the width L₃₂ (L₃₄) of the least wide working ply, and arranged radially between said working plies (32, 34), **characterised in that** the additional reinforcement (33)is axially composed of three parts, a central part in the form of a ply (33') formed of inextensible, substantially radial reinforcement elements, said ply (33') having an axial width L'₃₃ equal to at least 45% of the width S₀, and two lateral parts in the form of strips (33"), each formed of circumferential metallic reinforcement elements, cut so as to form sections of a length less than the circumference of the least long ply, but greater than 0.1 times said circumference, the cuts between sections being axially offset relative to each other, the modulus of elasticity upon traction per unit of width of a lateral strip (33") being less than the modulus of elasticity upon traction, measured under the same conditions, of the most extensible working ply (32, 34), and the width L"₃₃ of each strip being at most 10% of the width S₀.

3. A tyre with radial carcass reinforcement (1) of maximum axial width S₀, comprising a crown reinforcement (3) formed of at least two working crown plies (32, 34) of inextensible reinforcement elements, crossed from one ply (32) to the other (34), forming angles of between 10° and 45° with the circumferential direction, said plies (32, 34) having axial widths L₃₂, L₃₄ at least equal to 80% of the width S₀, an additional reinforcement (33) formed of least one ply (33) comprising at least substantially circumferential reinforcement elements, of width less by at least 15% of the width S₀ than the width L₃₂ (L₃₄) of the least wide working ply, and arranged radially between said working plies (32, 34), **characterised in that** the additional reinforcement (33) is axially composed of three parts, a central part in the form of a ply (33') formed of inextensible, substantially radial reinforcement elements, said ply (33') having an axial width L'₃₃ equal to at least 45% of the width S₀, and two lateral parts in the form of strips (33"), each formed of circumferential, inextensible, undulating metallic reinforcement elements, the ratio a/λ of the amplitude of undulation a to wavelength λ being at most 0.09, the modulus of elasticity upon traction per unit of width of a lateral strip (33") being less than the modulus of elasticity upon traction, measured under the same conditions, of the most extensible working ply (32, 34), and the width L"₃₃ of each strip being at most 10% of the width S₀.

4. A tyre according to Claim 1, **characterised in that** the elastic metallic reinforcement elements of the lateral parts (33") of the additional ply (33) have a curve of tensile stress σ as a function of the relative elongation ε which has shallow gradients for the slight elongations and a substantially constant, steep gradient for the greater elongations, the change of gradient taking place in a range of relative elongation of between 0.2% and 0.8%.

5. A tyre according to Claim 1, **characterised in that** the tensile modulus for each lateral part (33") of the additional ply (33) is such that it is low for a relative elongation of between 0% and 0.4%, and at most equal to the greatest modulus of elasticity upon traction of the most extensible working ply (32, 34), for relative elongations greater than 0.4%.

6. A tyre according to one of Claims 1 to 5, **characterised in that** the inextensible reinforcement elements of the plies (32, 34, 33') are preferably metal cables made of steel.

7. A tyre according to one of Claims 1 to 5, **characterised in that** the working plies (32, 34), on either side of the equatorial plane and in the immediate axial extension of the additional ply (33), are coupled over an axial distance 1 at least equal to 3.5% of the width S₀, then being decoupled by profiled members (4) of rubber mix at least over the remainder of the width common to said two working plies (32, 34).

8. A tyre according to one of Claims 1 to 5, **characterised in that** the crown reinforcement (3) is finished off radially to the outside by at least one additional ply (35), referred to as a protective ply, of so-called elastic reinforcement elements which are oriented relative to the circumferential direction at an angle of between 10° and 45° and of the same direction as the angle formed by the inextensible elements of the working ply (32, 34) radially adjacent thereto.

9. A tyre according to Claim 8, **characterised in that** the elastic reinforcement elements of the protective ply (plies) (35) are metal cables made of steel.

10. A tyre according to Claim 8, **characterised in that** the protective ply (35) has an axial width L₃₅ greater than the axial width of the least wide radially upper working ply (34), such that it covers the edges of said least wide working ply and such that it is coupled, in the axial extension of the additional reinforcement (33), with the widest working crown ply (32) over an axial distance of at least 2% of the width S₀, then being decoupled, axially to the outside, from said widest working ply (32) by profiled members of a thickness of at least 2 mm.

11. A tyre according to one of Claims 1 to 5, **characterised in that** the crown reinforcement (3) is finished off, radially to the inside between the carcass reinforcement (1) and the radially inner working ply (32) closest to said carcass reinforcement (1), by a triangulation ply of inextensible metallic reinforcement elements made of steel, forming with the circumferential direction an angle greater than 60° and of the same direction as that of the angle formed by the reinforcement elements of the ply (32) radially closest to the carcass reinforcement (1).

## Patentansprüche

1. Reifen mit radialer Unterbaubewehrung (1) mit einer maximalen axialen Breite S₀, umfassend eine Kronenbewehrung (3), die von mindestens zwei Kronenarbeitslagen (32, 34) von nicht dehnbaren Verstärkungselementen gebildet ist, die von einer Lage (32) zur nächsten (34) gekreuzt sind, wobei sie mit der Umfangsrichtung Winkel zwischen 10° und 45° bilden, wobei die Lagen (32, 34) axiale Breiten L₃₂, L₃₉ mindestens gleich 80 % der Breite S₀ aufweisen, wobei eine Zusatzbewehrung (33), die von mindestens einer Lage (33) gebildet ist, umfassend mindestens im Wesentlichen Umfangselemente mit einer Breite L₃₃ kleiner um mindestens 15 % der Breite S₀ als die Breite L₃₂ (L₃₄) der schmalsten Arbeitslage, wobei diese radial zwischen den Arbeitslagen (32, 34) angeordnet ist, **dadurch gekennzeichnet, dass** die Zusatzlage (33) axial aus drei Teilen besteht, einem zentralen Teil in Form einer Lage (33'), die von nicht dehnbaren metallischen und im Wesentlichen radialen Verstärkungselementen gebildet ist, wobei die Lage (33') eine axiale Breite L'₃₃ gleich mindestens 45 % der Breite S₀ aufweist, und zwei seitlichen Teilen in Form von Bändern (33"), die jeweils von elastischen metallischen Umfangsverstärkungselementen gebildet sind, wobei das Zugelastizitätsmodul pro Breiteneinheit eines seitlichen Bandes (33") höchstens gleich dem Zugelastizitätsmodul, gemessen unter denselben Bedingungen, der am meisten dehnbaren Arbeitslage (32, 34) ist, und wobei die Breite L"₃₃ jedes Bandes höchstens gleich 10 % der Breite S₀ ist.

2. Reifen mit radialer Unterbaubewehrung (1) mit einer maximalen axialen Breite S₀, umfassend eine Kronenbewehrung (3), die von mindestens zwei Kronenarbeitslagen (32, 34) von nicht dehnbaren Verstärkungselementen gebildet ist, die von einer Lage (32) zur nächsten (34) gekreuzt sind, wobei sie mit der Umfangsrichtung Winkel zwischen 10° und 45° bilden, wobei die Lagen (32, 34) axiale Breiten L₃₂, L₃₉ mindestens gleich 80 % der Breite S₀ aufweisen, wobei eine Zusatzbewehrung (33), die von mindestens einer Lage (33) gebildet ist, umfassend mindestens im Wesentlichen Umfangselemente mit einer Breite L₃₃ kleiner um mindestens 15 % der Breite S₀ als die Breite L₃₂ (L₃₄) der schmalsten Arbeitslage, wobei diese radial zwischen den Arbeitslagen (32, 34) angeordnet ist, **dadurch gekennzeichnet, dass** die Zusatzlage (33) axial aus drei Teilen besteht, einem zentralen Teil in Form einer Lage (33'), die von nicht dehnbaren metallischen und im Wesentlichen radialen Verstärkungselementen gebildet ist, wobei die Lage (33') eine axiale Breite L'₃₃ gleich mindestens 45 % der Breite S₀ aufweist, und zwei seitlichen Teilen in Form von Bändern (33"), die jeweils von elastischen metallischen Umfangsverstärkungselementen gebildet sind, die derart geschnitten sind, dass sie Abschnitte mit einer geringeren Länge als der Umfang der kürzesten Lage, aber größer als 0,1-mal den Umfang, bilden, wobei die Schnitte zwischen den Abschnitten axial zueinander versetzt sind, wobei das Zugelastizitätsmodul pro Breiteneinheit eines seitlichen Bandes (33") geringer als das Zugelastizitätsmodul, gemessen unter denselben Bedingungen, der am meisten dehnbaren Arbeitslage (32, 34) ist, und wobei die Breite L''₃₃ jedes Bandes höchstens gleich 10 % der Breite S₀ ist.

3. Reifen mit radialer Unterbaubewehrung (1) mit einer maximalen axialen Breite S₀, umfassend eine Kronenbewehrung (3), die von mindestens zwei Kronenarbeitslagen (32, 34) von nicht dehnbaren Verstärkungselementen gebildet ist, die von einer Lage (32) zur nächsten (34) gekreuzt sind, wobei sie mit der Umfangsrichtung Winkel zwischen 10° und 45° bilden, wobei die Lagen (32, 34) axiale Breiten L₃₂, L₃₄ mindestens gleich 80 % der Breite S₀ aufweisen, wobei eine Zusatzbewehrung (33), die von mindestens einer Lage (33) gebildet ist, umfassend mindestens im Wesentlichen Umfangselemente mit einer Breite L₃₃ kleiner um mindestens 15 % der Breite S₀ als die Breite L₃₂ (L₃₄) der schmalsten Arbeitslage, wobei diese radial zwischen den Arbeitslagen (32, 34) angeordnet ist, **dadurch gekennzeichnet, dass** die Zusatzlage (33) axial aus drei Teilen besteht, einem zentralen Teil in Form einer Lage (33'), die von nicht dehnbaren metallischen und im Wesentlichen radialen Verstärkungselementen gebildet ist, wobei die Lage (33') eine axiale Breite L'₃₃ gleich mindestens 45 % der Breite S₀ aufweist, und zwei seitlichen Teilen in Form von Bändern (33") , die jeweils von nicht dehnbaren und welligen elastischen metallischen Umfangsverstärkungselementen gebildet sind, wobei das Verhältnis a/λ der Wellungsamplitude a zur Wellenlänge λ höchstens gleich 0,09 ist, wobei das Zugelastizitätsmodul pro Breiteneinheit eines seitlichen Bandes (33") geringer als das Zugelastizitätsmodul, gemessen unter denselben Bedingungen, der am meisten dehnbaren Arbeitslage (32, 34) ist, und wobei die Breite L''₃₃ jedes Bandes höchstens gleich 10 % der Breite S₀ ist.

4. Reifen nach Anspruch 1, **dadurch gekennzeichnet, dass** die elastischen metallischen Verstärkungselemente der seitlichen Teile (33") der Zusatzlage (33) eine Zugspannungskurve σ in Abhängigkeit von der relativen Verlängerung ε mit geringen Gefällen für die geringen Verlängerungen und einem im Wesentlichen konstanten und starken Gefälle für die größeren Verlängerungen aufweisen, wobei die Änderung des Gefälles in einem Bereich einer relativen Verlängerung zwischen 0,2 % und 0,8 % stattfinden kann.

5. Reifen nach Anspruch 1, **dadurch gekennzeichnet, dass** das Zugmodul jedes seitlichen Teils (33'') einer Zusatzlage (33) derart ist, dass es bei einer relativen Verlängerung zwischen 0 % und 0,4 % gering und höchstens gleich dem höchsten Zugelastizitätsmodul der am meisten dehnbaren Arbeitslage (32, 34) bei relativen Verlängerungen über 0,4 % ist.

6. Reifen nach einem der Ansprüche 1 bis 5, **dadurch gekennzeichnet, dass** die nicht dehnbaren Verstärkungselemente der Lagen (32, 34, 33') vorzugsweise metallische Stahlkabel sind.

7. Reifen nach einem der Ansprüche 1 bis 5, **dadurch gekennzeichnet, dass** die Arbeitslagen (32, 34) beiderseits der Äquatorialebene und in der unmittelbaren axialen Verlängerung der Zusatzbewehrung (33) auf einem axialen Abstand 1 mindestens gleich 3,5% der Breite S₀ gekoppelt sind, um dann durch Profile (4) aus Kautschukgemisch mindestens auf der restlichen gemeinsamen Breite der beiden Arbeitslagen (32, 34) entkoppelt zu sein.

8. Reifen nach einem der Ansprüche 1 bis 5, **dadurch gekennzeichnet, dass** die Kronenbewehrung (3) radial außen durch mindestens eine Zusatzlage (35), Schutzlage genannt, von so genannten elastischen Verstärkungselementen ergänzt ist, die zur Umfangsrichtung in einem Winkel zwischen 10° und 45° mit derselben Ausrichtung wie der Winkel, der von den nicht dehnbaren Elementen der Arbeitslage (32, 34), die an sie radial angrenzt, gebildet ist, ausgerichtet sind.

9. Reifen nach Anspruch 8, **dadurch gekennzeichnet, dass** die elastischen Verstärkungselemente der Schutzlage(n) (35) metallische Stahlkabel sind.

10. Reifen nach Anspruch 8, **dadurch gekennzeichnet, dass** die Schutzlage (35) eine größere axiale Breite L₃₅ als de axiale Breite der schmalsten radial oberen Arbeitslage (34) hat, so dass sie die Ränder der schmalsten Arbeitslage abdeckt und in der axialen Verlängerung der Zusatzbewehrung (33) mit der breitesten Kronenarbeitslage (32) auf einem axialen Abstand mindestens gleich 2 % der Breite S₀ gekoppelt ist, um dann axial außerhalb von der breitesten Arbeitslage (32) durch Profile mit einer Dicke mindestens gleich 2 mm entkoppelt zu werden.

11. Reifen nach einem der Ansprüche 1 bis 5, **dadurch gekennzeichnet, dass** die Kronenbewehrung (3) radial innen zwischen der Unterbaubewehrung (1) und der radial inneren Arbeitslage (32), die der Unterbaubewehrung (1) am nächsten ist, von einer Triangulationslage von nicht dehnbaren metallischen Verstärkungselementen aus Stahl ergänzt ist, die mit der Umfangsrichtung einen Winkel über 60° bilden, der dieselbe Ausrichtung wie jene des Winkels hat, der von den Verstärkungselementen der radial zur Unterbaubewehrung (1) nächsten Lage (32) gebildet wird.
